# EUROPÄISCHE PATENTANMELDUNG

(11) **EP 0 862 022 A2**
(43) Veröffentlichungstag der Anmeldung: **02.09.1998**
(21) Anmeldenummer: 98102862.4
(22) Anmeldetag: 19.02.1998
(51) Int. Cl.: F24D 17/00, C02F 1/44

(54) **Wasseraufbereitungsanlage mit einem Filter**

(30) Priorität: 27.02.1997 DE 19707830
(71) Anmelder: Weiser, Steffen, 07924 Crispendorf (DE)
(72) Erfinder: Weiser, Steffen, 07924 Crispendorf (DE)
(74) Vertreter: Däsch, Götz, Dipl.-Ing. Patentanwalt

(57) **Zusammenfassung**

Der Erfindung liegt die Aufgabe zugrunde, mit hoher Sicherheit und geringem Energieaufwand die Ausbreitung von Krankheitserregern, insbesondere von Legionellen, im Rohrleitungsnetz von Wasseraufbereitungsanlagen zu verhindern, wobei sich die letztere durch ingesamt minimalen technischen Aufwand, geringe Betriebskosten sowie hohe Betriebsbereitschaft auszeichnen sollen.

Diese Aufgabe wird durch eine Wasseraufbereitungsanlage gelöst, bei welcher zwischen dem Wasservorratsbehälter, der auch ein Warmwasserbereiter (1) sein kann, und dem Rohrleitungsnetz (11) zur Wasserentnahme ein rückspülbarer Cross-Flow-Filter (Querstromfilter) (7) angeordnet ist.

Anwendungsgebiet der Erfindung sind Wasseraufbereitungsanlagen, insbesondere Warmwasseraufbereitungsanlagen.

## Beschreibung

Die vorliegende Erfindung betrifft eine Wasseraufbereitungsanlage mit einem Filter, insbesondere zur Zurückhaltung der unter der Bezeichnung 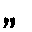 Legionellen" bekannten Krankheitserreger. Die Eigenart und die Gefährlichkeit dieser auch lateinisch als 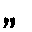 legionella pneumophila" bezeichneten und eine Lungenkrankheit verursachenden Mikroben besteht darin, daß sie in geringem Maße in der natürlichen Mikroflora des Wassers vorkommen, sich insbesondere in ruhendem Wasser bei 30 bis 50 °C Wassertemperatur stark vermehren und die Ansteckung offenbar ausschließlich durch Einatmen von Aerosolen beispielsweise beim Duschen erfolgt.

Allgemein bekannt bzw. naheliegend ist die Bekämpfung dieser Legionellen in Wasseraufbereitungsanlagen nach folgenden Verfahren:

### 1. Thermische Desinfektion

Dazu muß das Wasser auf mindestens 70 °C erhitzt werden. Nachteilig ist neben dem hohen Energieverbrauch und den hohen Wärmeverlusten, da im ganzen Leitungssystem eine bestimmte erhöhte Temperatur eingehalten werden muß, vor allem die Tatsache, daß eine 100 %ige Entkeimung kaum möglich ist, weil die erwähnte 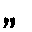 Kerntemperatur" schwerlich alle toten Ecken und Winkel des Leitungssystems erreichen kann. Auch muß das gesamte Installationssystem für diese hohen Temperaturen ausgelegt sein, und es kommt ggf. zwangsläufig zu stärkeren Kalkablagerungen mit allen ihren Folgeschäden und -kosten.

### 2. Chemische Desinfektion

Durch die Zugabe der Chemikalien ist keine Trinkwasserqualität mehr gegeben. Außerdem wäre eine laufende Kontrolle der Zugabemenge bzw. der Konzentration erforderlich.

### 3. Bestrahlung durch UV-Licht

Hierbei sind nur geringe Durchflußraten möglich und es ist ebenfalls keine 100 %ige Desinfektion gegeben.

Es st auch eine Wasseraustrittarmatur bekannt, in welcher sich ein feinporiger Filter zum Zurückhalten der Legionellen befindet (DE 39 18 468 A1). Nachteilig ist hierbei, daß es sich, anders als beim Cross-Flow-Filter, um eine in Strömungsrichtung angeordnete Filterpatrone handelt, die sich schnell zusetzt und dann komplett ausgewechselt werden muß. Offenbar um solche Filterpatronen sparsam einzusetzen, ist eine Umschaltmöglichkeit auf ungefiltertes Wasser vorgesehen, was die Gefahr von Verwechslungen mit sich bringt. Schließlich ist die Anbringung des Filters an der Wasseraustrittsarmatur, also am Ende der des Rohrleitungssystems auch unter dem Aspekt unvorteilhaft, daß die Ausbreitung der Legionellen im gesamten Rohrleitungsnetz in keiner Weise behindert wird.

Unabhängig vom Zweck der Filtration sind Filteranlagen mit automatischer Rückspülung von bekannt, bei welchen unter Aufrechterhaltung der Möglichkeit der Wasserentnahme automatisch, meist in Abhängigkeit vom Staudruck infolge Verstopfung des Filters, zwischen mehreren Filtern umgeschaltet wird, die anders als beim Cross-Flow-Filter in der Strömungsrichtung liegen (sogenanntes 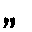 dead end") und demzufolge auch sehr schnell verstopfen (DE 32 15 533 A1 und DE 35 26 293 A1). Dieses Prinzip ist zum einen sehr aufwendig und kompliziert und zum anderen bei Cross-Flow-Filtern, wo sich wegen des Retentatabflusses prinzipiell Rein Staudruck aufbauen kann, nicht anwendbar.

Der Erfindung liegt daher die Aufgabe zugrunde, mit hoher Sicherheit und geringem Energieaufwand die Ausbreitung von Krankheitserregern, insbesondere von Legionellen, im Rohrleitungsnetz von Wasseraufbereitungsanlagen zu verhindern, wobei sich die letztere durch ingesamt minimalen technischen Aufwand, geringe Betriebskosten sowie hohe Betriebsbereitschaft auszeichnen sollen.

Diese Aufgabe wird durch die in den Patentansprüchen beschriebene Wasseraufbereitungsanlage gelöst.

Die erfindungsgemäße Wasseraufbereitungsanlage ermöglicht, ausgerüstet mit einem Filter extremer Filterfeinheit, der sich auch durch schnelle Rückspülbarkeit und lange Standzeit auszeichnet, die Sterilfiltration von Leitungswasser, das ansonsten, beispielsweise hinsichtlich des Mineralgehaltes, seinen ursprünglichen Zustand bewahrt und weiterhin Trinkwasserqualität aufweist.

Da auch das Zirkulationswasser der Wasseraufbereitungsanlage der Filtration unterliegt, befindet sich immer weitestgehend steriles Wasser in derselben.

Die Anlage zeigt hohe Filterleistungen und lange Standzeit der Filterelemente bei kurzer Rückspülzeit, während der die Wasserentnahme nicht unterbrochen wird. Konstruktionsmäßig ist der Anlagenaufbau sehr einfach und betriebssicher und es sind keine turnusmäßig auszutauschenden Verschleiß- oder Verbrauchsteile vorgesehen.

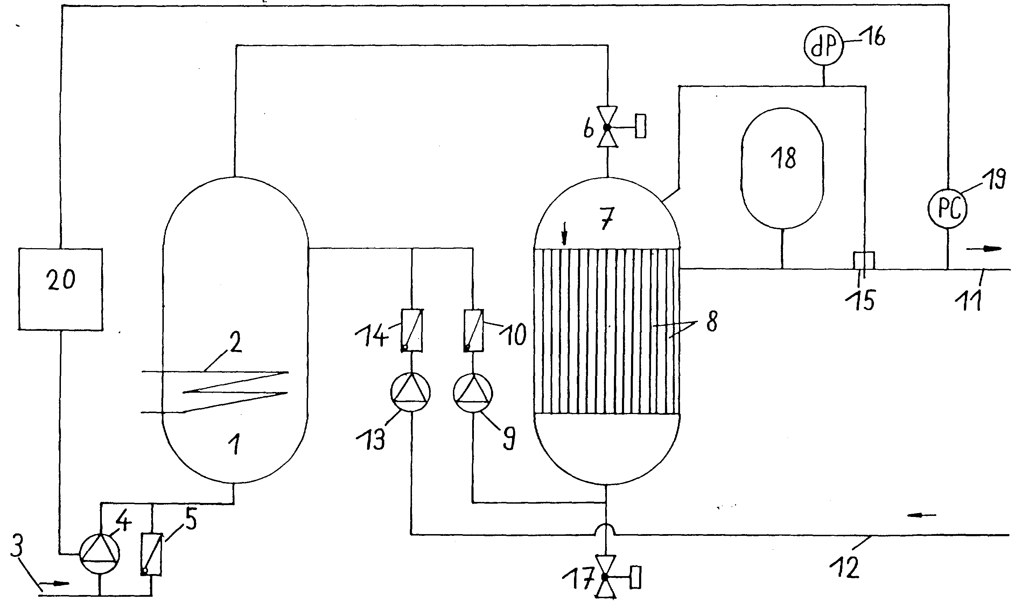

Die Erfindung wird nachstehend durch ein Ausführungsbeispiel anhand der beigefügten Zeichnung, weiche ein Schema einer erfindungsgemäßen Anlage zeigt, speziell für den Fall einer Warmwasseraufbereitungsanlage näher erläutert:

Die beispielsweise für ein Hotel vorgesehene Warmwasseraufbereitungsanlage weist einen Warmwasserbereiter 1 mit einem eingebautem Heizkörper oder Wärmetauscher 2 auf, der über eine Frischwasserzufuhrleitung 3, eine erste Pumpe 4 sowie parallel zu dieser ein erstes Rückschlagventil 5 aus dem öffentlichen Trinkwassernetz oder einem Brunnen (nicht dargestellt) gespeist wird. Das erwärmte Wasser gelangt, im Normalfall noch unter dem Druck des öffentlichen Trinkwassernetzes von etwa 0,6 MPa, über ein geöffnetes erstes Magnetventil 6 in den Cross-Flow-Filter 7.

Dieser Cross-Flow-Filter 7 besteht im wesentlichen aus Filterrohren 8, von denen bei der dargestellten Ausführungsform 8 Stück angedeutet zu erkennen sind.

Grundsätzlich ist die Zahl und die Größe der parallel zu schaltenden Filterrrohre 8 nach dem benötigten Durchsatz an filtriertem Wasser festzulegen. Eines dieser Filterrohre 8 hat beispielsweise einen Außendurchmesser von 25 mm, eine Länge von 1200 mm und und wird in seiner Längsrichtung von 19 gleichmäßig über den Querschnitt verteilten Bohrungen (nicht dargestellt) von je 3,5 mm Durchmesser durchzogen. Die Filterrohre 8 bestehen aus Aluminiumoxidkeramik mit einer Porengröße von max. 4 µm. Die Bohrungen sind innen mit einer speziellen, gleichfalls aus Aluminiumoxidkeramik bestehenden Filtermembran beschichtet, deren maximale Porengröße bedingt durch die Größe der zurückzuhaltenden Mikroben auf 0,2 µm festgelegt ist. Die Fläche dieser Filtermembran eines Filterrohres 8 beträgt 0,24 m² und der Filtratdurchsatz beim einem Druckunterschied von 0,1 MPa etwa 400 Liter pro Stunde.

Das Besondere in der Funktion eines Cross-Flow-Filters 7 besteht darin, daß an der Stirnfläche der Filterrohre 8, die gegenüber der Außenmantelfläche der Filterrohre 8 angedichtet ist, das zu filtrierende Wasser unter Druck, in diesem Falle von oben, in die Bohrungen eintritt und zum Teil als Filtrat an der Außenmantelfläche derselben wieder austritt. Das übrige Wasser tritt unfiltriert als sogenanntes Retentat unten wieder aus den Bohrungen aus und gelangt über eine zweite Pumpe 9 und ein zweite Rückschlagventil 10 wieder in den Warmwasserbereiter 1. Der Vorteil dieser Anordnung gegenüber einem sogenannten 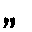 dead end"-Filter, bei welchem alles ankommende Wasser hinduchtritt, besteht darin, daß die selbst der Filtration garnicht unterworfene Retentatströmung parallel zur Filtermembran ein vollständiges Verstopfen derselben verhindert. Zugleich wird durch diese Anordnung die Rückspülung sehr vereinfacht, was noch beschrieben wird. Im Gegensatz zu der hier senkrecht verlaufenden Strömung des Retentats tritt das Filtrat seitlich aus den Filterrohren 8 (daher die Bezeichnungen 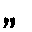 Querstrom-Filter" bzw. 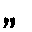 Cross-Flow-Filter") und und damit aus dem Cross-Flow-Filter 7 selbst aus und gelangt in das Rohrleitungsnetz 11 zur Warmwasserentnahme.

Um das Wasser im Rohrleitungsnetz 11 und im Cross-Flow-Filter 7 auch dann in Bewegung zu halten und zu filtirieren, wenn keine Entnahme von Warmwasser erfolgt, führt eine Rückflußleitung 12 über eine dritte Pumpe 13 und ein drittes Rückschlagventil 14 zurück zum Warmwasserbereiter 1 sowie wiederum durch den Cross-Flow-Filter 7. Da die Legionellen sich insbesondere im unbewegten Warmwasser vermehren, ist dies eine zusätzliche Sicherheitsmaßnahme, falls einzelne Keime auf irgendeine Art in das Leitungsnetz hinter dem Cross-Flow-Filter 7 gelangen sollten.

Die Rückspülung des Cross-Flow-Filters 7 erfolgt nach Durchfluß einer bestimmten. von einem Durchflußmengenzähler 15 und/oder bei einem durch ein Meßgerät 16 festgestellten Druckabfall hinter dem Cross-Flow-Filter 7 infolge eines gewissen Zusetzens, wenn auch keiner Verstopfung desselben, innerhalb von 1 bis 2 Sekunden, indem während dieser Zeit das erste Magnetventil 6 geschlossen und ein zweites Magnetventil 17 in einem Ablaufstrang geöffnet wird. Dadurch fällt der Druck im Cross-Flow-Filter 7 vor den Filtermembranen ab, während der hinter denselben im Rohrleitungsnetz 11 durch einen Druckspeicher 18 vom Membrantyp sogar dann oberhalb eines gewissen Wertes gehalten wird, wenn gleichzeitig aus dem Rohrleitungsnetz 11 noch Warmwasser entnommen wird. Durch diese Druckumkehr erfolgt das Rückspülen der Filterrohre 8 im Cross-Flow-Filter 7. Die mit Keimen durchsetzte Spülflüssigkeit kann durch das geöffnete zweite Magnetventil 17 abfließen. Dabei verhindert das Rückschlagventil 10, daß die nun unter höherem Druck als das Frischwasser stehende Spülflüssigkeit in den Warmwasserbereiter 1 strömt.

Nach Ende der Rückspülung wird das erste Magnetventil 6 geöffnet und das zweite Magnetventil 17 geschlossen. Wenn infolge der Rückspülung oder bei starker Entnahme von Warmwasser aus dem Rohrleitungsnetz 11 der Vordruck im Warmwasserbereiter 1 und damit am Eingang des Cross-Flow-Filter 7 zu stark abfällt, kann der Lieferdruck der Frischwasserzufuhrleitung 3 durch die erste Pumpe 4 unterstützt werden, die über einen Drucksensor 19 und eine Druckdifferenzsteuerung 20 zugeschaltet wird.

### Aufstellung der verwendeten Bezugszahlen

- 1: Warmwasserbereiter
- 2: Heizkörper bzw. Wärmetauscher
- 3: Frischwasserzufuhrleitung
- 4: erste Pumpe
- 5: erstes Rückschlagventil
- 6: erstes Magnetventil
- 7: Cross-Flow-Filter
- 8: Filterrohr
- 9: zweite Pumpe
- 10: zweites Rückschlagventil
- 11: Rohrleitungsnetz
- 12: Rückflußleitung
- 13: dritte Pumpe
- 14: drittes Rückschlagventil
- 15: Durchflußmengenzähler
- 16: Meßgerät
- 17: zweites Magnetventil
- 18: Druckspeicher
- 19: Drucksensor
- 20: Druckdifferenzsteuerung

## Patentansprüche

1. Wasseraufbereitungsanlage mit einem Filter, insbesondere zur Zurückhaltung der unter der Bezeichnung 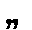 Legionellen" bekannten Krankheitserreger, dadurch gekennzeichnet, daß zwischen dem Wasservorratsbehälter, der auch ein Warmwasserbereiter (1) sein kann, und dem Rohrleitungsnetz (11) zur Wasserentnahme ein rückspülbarer Cross-Flow-Filter (Querstromfilter) (7) angeordnet ist.

2. Wasseraufbereitungsanlage nach Anspruch 1, dadurch gekennzeichnet, daß der Cross-Flow-Filter (7) im wesentlichen aus einem grobporösen Keramikkörper (8) besteht, dessen dem Wasservorratsbehälter (1) zugewandte Flächen mit einer keramischen Filtermembran beschichtet sind, deren maximale Porengröße 0,2 µm beträgt.

3. Wasseraufbereitungsanlage nach Anspruch 1, dadurch gekennzeichnet, daß der Cross-Flow-Filter (7) im wesentlichen aus einer Polymer-Filtermembran besteht, deren maximale Porengröße 0,2 µm beträgt.

4. Wasseraufbereitungsanlage nach einem der bisherigen Ansprüche, dadurch gekennzeichnet, daß die durch Druckumkehr zwischen der Retentat- und der Filtratseite (welche der Wasserzufuhr und -entnahme entsprechen) des Cross-Flow-Filters (7) bewirkbare Rückspülung desselben durch einen Durchflußmengenzähler (15) und/oder ein Meßgerät (16) für einen Druckabfall zwischen Bereichen hinter dem Cross-Flow-Filter (7) auslösbar ist.

5. Wasseraufbereitungsanlage nach einem der bisherigen Ansprüche, gekennzeichnet durch einen Druckspeicher (18) und/oder einen Druckregelkreis, bestehend aus einem Drucksensor (19) auf der Wasserentnahmeseite, einer ersten Pumpe (4) in der Frischwasserzufuhrleitung (3) und einer zwischen beiden angeordneten Druckdifferenzsteuerung (20), zur Aufrechterhaltung des Entnahmedrucks im Rohrleitungsnetz (11).

6. Wasseraufbereitungsanlage nach einem der bisherigen Ansprüche, dadurch gekennzeichnet, daß zwischen der Retentatseite des Cross-Flow-Filters (7) und/oder einer Rückflußleitung (12) von der Entnahmeseite einerseits und dem Wasservorratsbehälter (1) andererseits je eine in Richtung desselben wirkende zweite Pumpe (9) bzw. dritte Pumpe (13) angeordnet ist.

7. Wasseraufbereitungsanlage nach Anspruch 6, dadurch gekennzeichnet, daß zwischen der zweiten bzw. dritten Pumpe (9, 13) und dem Wasservorratsbehälter (1) ein zweites bzw. drittes Rückschlagventil (10, 14) angeordnet ist.

8. Wasseraufbereitungsanlage nach Anspruch 5 bis 7, dadurch gekennzeichnet, daß in der Frischwasserzufuhrleitung (3) parallel zu ersten Pumpe (4) ein erstes Rückschlagventil (5) angeordnet ist.

9. Wasseraufbereitungsanlage nach Anspruch 4 bis 8, dadurch gekennzeichnet, daß der Zulauf und der Ablauf auf der Retentatseite des Cross-Flow-Filters (7) wechselweise durch Ventile, vorzugsweise ein erstes und ein zweites Magnetventil (6, 17) verschließbar ist.
